# EUROPÄISCHE PATENTSCHRIFT

(11) **EP 0 465 797 B1**
(45) Veröffentlichungstag und Bekanntmachung des Hinweises auf die Patenterteilung: **16.09.1998**
(21) Anmeldenummer: 91107889.7
(22) Anmeldetag: 16.05.1991
(51) Int. Cl.: G01N 23/223, G01B 15/02

(54) **Vorrichtung zum Messen des Eisengehaltes in Zinkschichten**
Apparatus for measuring the iron content in zinc layers
Appareil pour mesurer la teneur en fer dans des couches de zinc

(30) Priorität: 06.07.1990 DE 4021617
(43) Veröffentlichungstag der Anmeldung: 15.01.1992
(73) Patentinhaber: Eberline Instruments GmbH, D-91056 Erlangen (DE)
(72) Erfinder: Vogler, Friedrich, Dr., W-8520 Erlangen (DE); Ortner, Hans-Werner, Dr., W-8520 Erlangen (DE); Mayerhofer, Matthias, W-8520 Erlangen (DE)
(74) Vertreter: Rehmann, Klaus H.

(56) Entgegenhaltungen:
- EP-A- 0 197 157
- EP-A- 0 348 574
- EP-A- 0 389 774
- WO-A-89/11095
- PATENT ABSTRACTS OF JAPAN vol. 7, no. 15 (P-169)(1160) 21. Januar 1983 & JP-A-57 172 207 ( DAINI SEIKOSHA ) 23. Oktober 1982
- ADVANCES IN INSTRUMENTATION. Bd. 30, Nr. 4, 1975, PITTSBURGH US PAPER 823. L.E. TAYLOR: 'The application of low energy gamma sources to the measurement of strip and coating thickness in the steel industry'
- PATENT ABSTRACTS OF JAPAN vol. 10, no. 206 (P-748)(2262) 18. Juli 1986 & JP-A-61 045 916 ( RIGAKU DENKI KOGYO ) 6. März 1986
- PATENT ABSTRACTS OF JAPAN vol. 11, no. 22 (P-538)(2469) 21. Januar 1987 & JP-A-61 195 335 ( SHIMADZU ) 29. August 1986

## Beschreibung

Die Erfindung betrifft eine Vorrichtung zum Messen des Eisengehaltes in Zinkschichten und/oder der Stärke der Zinkschicht bei verzinktem Stahl, mittels Röntgenstrahlungsquelle und Strahlungsdetektor. Bei der Stahlerzeugung wird bandförmiger Stahl zur Erhöhung des Korrosionswiderstandes mit Zink beschichtet. Diese Beschichtung erfolgt beispielsweise in einem sogenannten Galvannealing Prozeß d.h. durch nachträgliches Aufheizen des verzinkten Stahls auf ca. 500 bis 600°C. Durch dieses "galvannealing" diffundiert Eisen in die Zinkschicht, so daß intermetallische Verbände zwischen Zink und Eisen gebildet werden. Dieser intermetallische Verband ist für die Weiterverarbeitbarkeit des beschichteten Stahls und das Haftverhalten der Zinkschicht von außerordentlich großer Bedeutung. Dabei kommt es insbesondere darauf an, während des Herstellungsvorganges, den Eisenanteil in der Zinkschicht in engen Grenzen einzustellen, wozu man die jeweils genauen Prozentwerte des Eisengehaltes in der Zinkschicht kennen muß. Zur Bestimmung dieses Eisenprozentanteils bzw. zum Messen des Eisenanteils in der Zinkschicht wird von der Kawasaki Seitetsu Giho unter dem Titel "CONTINUOUS MEASUREMENT OF Fe CONTENT IN GALVANNEALED COATING" vom 28.01.88, ein Verfahren zur Messung der kristallographischen Gitterkonstanten für die Fe/Zn-Kristallisationen mit Hilfe der Bragg-Methode beschrieben. Dieses Verfahren ist jedoch nur für den Laborbetrieb geeignet, da der apparative Aufwand sehr hoch ist, die Meßzeiten relativ lang sind, nämlich länger als 20 Sekunden und eine Lageänderung des Meßgutes zu fehlerhaften Meßergebnissen führt.

Weiterhin ist ein Verfahren bekannt, bei welchem durch einen Röntgenstrahler eine Material-Strahlungs-Anregung derart erfolgt, daß eine energieselektive Messung für die Zink- und Eisenanteile mit Hilfe eines Proportionalzählers erfolgen kann. Dieses Verfahren wird von Schikawa Works Nisshin Steel Co. Ltd, Japan unter dem Titel "MEASURING THE DEGREE OF ALLOYING OF GALVANNEALED STEEL SHEETS BY X-RAY DIFFRACTION TECHNIQUE AND ITS FRACTICAL USE" beschrieben. Nach diesem Verfahren wird der Proportionalzähler (Detektor) während des Meßvorganges in verschiedenen Winkeln zur Oberfläche des Meßguts gebracht, so daß aus diesen Messergebnissen die Kristallstruktur ermittelt werden kann. Dabei treten ganz erhebliche Stablitätsprobleme auf, so daß beispielsweise alleine die Bewegung des Meßgutes, d.h. die Bewegungen des Materials um die Auflagefläche, zu Fehlmessungen führen muß. Damit ist auch dieses Verfahren lediglich für den Laborbetrieb geeignet.

Aus der EP-A-0 348 574 ist ein Verfahren und eine Vorrichtung zur Messung der kristallographischen Gitterkonstanten für die Fe/Zn-Kristallisationen mit Hilfe der Bragg-Methode entnehmbar, bei welcher vier Detektoren 14A,14B,14C und 14D zusammen mit einer Röntgenröhre angeordnet sind. Der Detektor 14C muß in einem Winkel angebracht werden, der die Erfordernisse der Bragg'schen Formel befriedigt.

Dieses Verfahren setzt, um im Fertigungsprozess eingesetzt werden zu können, entweder einen umfangreichen apparativen Aufwand voraus, nämlich 4 Detektoren mit einer jeweils eigenen elektronischen Impulsverarbeitung, für die aufwendige Erfassung der Diffraktionslinien oder man muß einen hohen Zeitbedarf bei gleichzeitig geringerer Genauigkeit, wenn nur zwei Detektoren nach der Bragg-Methode eingesetzt werden, in Kauf nehmen. Außerdem müssen aufwendig herzustellende Detektoren eingesetzt werden, deren Winkelanordnung zur Röntgenquelle durch die Bragg-Bedingungen genauestens festgelegt ist. Eine Verschiebung führt zum Nichtfunktionieren.

Keines der bisher bekannten Verfahren zum Messen des Eisengehaltes in Zinkschichten bei verzinktem Stahl ist geeignet für Messungen während des Produktionsvorganges eingesetzt zu werden, um damit die aktuellen Werte erkennbar zu machen, so daß die Prozeßsteuerung entsprechend vorgenommen werden kann.

Die Erfindung hat sich daher die Aufgabe gestellt eine Vorrichtung zum Messen des Eisengehaltes in Zinkschichten und/oder der Zinkschichtstärke bei verzinktem Stahl zu schaffen, durch die während des rauhen Produktionsablaufes die aktuellen Beschichtungsmeßwerte ermittelt werden.

Die Aufgabe wird erfindungsgemäß dadurch gelöst, daß die Vorrichtung einen Meßkopf aufweist, in dem die Röntgenstrahlungsquelle in einem Winkel (Gamma) zwischen 60° und 120° und die Detektoren angeordnet sind, wobei zwei auf Zink-Strahlung empfindliche Detektoren in einem Winkel (Alpha) von maximal 30° symetrisch zum Meßgut und der andere, auf Eisenstrahlung empfindliche Detektor, in einem Winkel (Beta) zwischen 60° und 120° jeweils zur Ebene des zu messenden Materials stehen.

Diese Meßvorrichtung ermöglicht, im sogenannten online-Betrieb, direkt nach dem Auftrag der Zinkschicht die Messungen so vorzunehmen, daß der Eisengehalt in der Zinkschicht festgestellt wird. Gleichzeitig kann damit auch die Stärke der Zinkschicht gemessen und angezeigt werden.

Auf der Zeichnung ist eine beispielsweise Ausführungsform der erfindungsgemäßen Vorrichtung schematisch dargestellt.

Es zeigen:

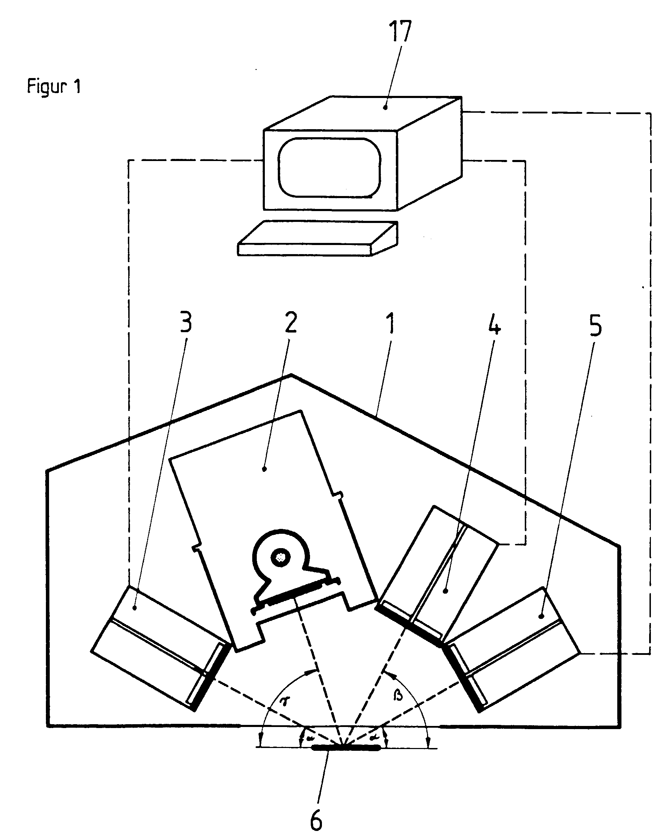

- Figur 1: einen Querschnitt durch die Vorrichtung.
- Figur 2: einen Querschnitt durch einen Ionisationskammer-Detektor mit Absorptionsfilter.
- Figur 3: einen Querschnitt durch einen Halbleiterdioden-Detektor mit Absorptionsfilter.
- Figur 4: einen Querschnitt durch einen Halbleiterdioden-Detektor mit Pulsdiskriminierung.

Der mit 1 bezeichnete Meßkopf weist eine Hochspannungs-Röntgenstrahlungsquelle 2 sowie Detektoren 3,4 und 5 auf.

Die Röntgenstrahlungsquelle 2 ist in einem Winkel Gamma zur Ebene des zu messenden Materials 6 (verzinkter Stahl) befestigt, während der Detektor 3 und 5 unter dem Winkel Alpha und Detektor 4 unter Winkel Beta, ebenfalls zur Ebene des zu messenden Materials 6, angeordnet sind. Der Winkel Gamma liegt zwischen 60° und 120°, der Winkel Alpha beträgt maximal 30° und der Winkel Beta liegt ebenfalls zwischen 60° bis 120°.

Die Detektoren 3, 4 und 5 sind als mit selektiver Empfindlichkeit ausgestattete Detektoren aufgebaut, das bedeutet, daß mittels dieser Detektoren die Intensität einer bestimmten Art von ionisierender Strahlung (selektiv) in ein elektrisches Signal gewandelt und damit meßbar gemacht wird.

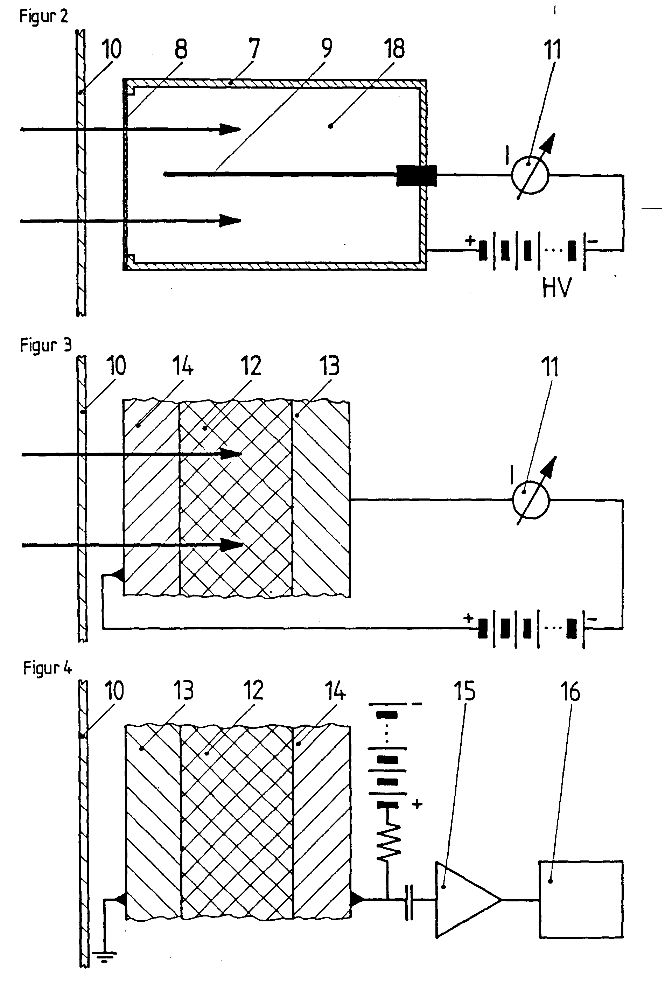

Die Detektoren 3, 4 und 5 detektieren die charakteristischen K-Linien von Zn (Zink) und Fe (Eisen), wobei entweder entsprechende Absorptionsfilter oder die Pulsdiskriminierung zum Erreichen der selektiven Empfindlichkeit eingesetzt werden. Beispielsweise einsetzbare Bauformen von Detektoren werden anhand der Figuren 2, 3 und 4 erläutert.

Der in Figur 2 schematisch dargestellte Detektor besteht aus einem mit Edelgas gefüllten Metallgehäuse 7, das als Ionisationskammer 18 bezeichnet wird. Das Gehäuse 7 ist mit einem Eintrittsfenster 8, beispielsweise aus Kunststoffolie, versehen. Im Inneren des Gehäuses 7 -und gegenüber dem Gehäuse 7 isoliert - ist eine oder sind mehrere Metallelektroden 9 angebracht. Zwischen den Elektroden 9 und dem Gehäuse 7 ist während des Betriebes Hochspannung angelegt.

Tritt nun durch das Eintrittsfenster 8 ionisierende Strahlung in das Gehäuse 7 ein, so bewirkt diese, durch Drift der Ladungsträger im elektrischen Feld der Hochspannung, einen meßbaren Stromfluß an den Elektroden 9, welcher durch ein empfindliches Amperemeter 11 meßbar ist. Dieser Stromfluß reflektiert die Intensität der Strahlung. Die selektive Empfindlichkeit des Detektors wird durch das Anbringen einer entsprechenden Metallfolie 10, als Absorptionsfilter, vor das Eintrittsfenster 8, erzielt.

Derartige Absorptionsfilter bestehen beispielsweise aus Kupfer, Eisen oder anderen geeigneten Metallen.

In Figur 3 ist ein Halbleiterdioden-Detektor mit seinen p- und n- leitenden Zonen 13 und 14 schematisch dargestellt, dessen selektive Empfindlichkeit ebenfalls durch die Anbringung einer Metallfolie 10 vor der Diode bewirkt wird. Ähnlich dem in Figur 2 gezeigten Ionisationskammer-Detektoren wird auch bei dem Halbleiterdioden-Detektor, mittels Hochspannung in Sperrichtung der Dioden, eine große, ladungsträgerarme Zone 12 gebildet, in der bei Eintritt von ionisierender Strahlung, durch die Bildung von Ladungsträgerpaaren, ein meßbarer Stromfluß erzeugt wird, der in einem empfindlichen Amperemeter 11 gemessen werden kann.Dieser Stromfluß reflektiert wiederum die Intensität der Strahlung.

In Figur 4 ist ein Halbleiterdetektor gezeigt, der in seinem inneren Aufbau dem nach Figur 3 entspricht.

Durch die Ankopplung eines sehr empfindlichen Verstärkers 15 werden elektronisch gut zu verarbeitende Impulse geliefert, deren Pulshöhen die Energie der einzelnen Strahlungsquanten (der ionisierenden Strahlung) reflektiert. Die selektive Empfindlichkeit des Detektors wird durch die elektronische Selektion der Pulshöhen in einem Einkanaldiskriminator 16 erzielt.

Die Wirkungsweise ist folgende:
Das Meßgut 6, d.h. der zinkbeschichtete Stahl wird mit Röntgenstrahlen aus der Röntgenröhre 2 bestrahlt und zur Emission von Röntgen-Fluoreszenzlinien angeregt. Dabei handelt es sich um die sogenannte charakteristische K-Strahlung von Zink und Eisen. Diese Fluoreszenzstrahlungen werden durch Detektoren 3, 4 und 5, die in den angegebenen Winkelbereichen Alpha, Beta und Gamma angeordnet sind, nachgewiesen. Der eine Detektor 3 bzw. 5, vor welchem sich beispielsweise eine Kupfer-Metallfolie 10 als Absorptionsfilter befindet, ist unter einem flachen Winkel Alpha von maximal 30° zum Meßgut 6 montiert. Die im Meßgut 6 angeregte Zinkstrahlung hat demzufolge sehr lange Strecken zu durchqueren und erfährt daher eine von der Zinkschichtstärke des Materials 6 nahezu unabhängige Schwächung im Meßgut 6 selbst. Dieses führt dazu, daß dieser Detektor 3 bzw. 5 in erster Näherung nur den Eisengehalt der Beschichtung registriert. Der andere Detektor 4 ist unter einem Winkel Beta von 60° bis 120° zum Meßgut 6 positioniert, um eine möglichst große Eindringtiefe der Beobachtung zu erzielen. Vor diesem Detektor 4 befindet sich als Absorptionsfilter z.B. eine Metallfolie 10 aus Eisen, so daß dieser zum Nachweis der Eisenstrahlung ausgerüstet ist. Die Schwächung der Intensität der ionisierenden Strahlung in der Beschichtungsstärke wird in diesem Detektor 4 gemessen und ergibt in erster Näherung die Zink-Flächenmasse der Beschichtung.

Zur genauen Bestimmung der Meßwerte für die Zink-Flächenmasse und den prozentualen Eisengehalt in der Beschichtung werden die Signale aus den o. g. Detektoren 3 und 4 einem mathematischen Algorithmus unterzogen, bei dem der prozentuale Anteil Fe in der Zn Schicht abhängig ist von dem Verhältnis der Flächenmasse zum Eisengehalt. Diese Signale werden in allgemein bekannten elektronischen Datenverarbeitungseinrichtungen 17 verarbeitet, angezeigt und/oder registriert und zur Steuerung des Herstellungsprozesses verwendet.

Sollte aufgrund bestimmter Produktionsgegebenheiten, während des Produktionsablaufes, Verkippungen oder Flatterbewegungen des Meßgutes 6 erfolgen, so entstehen keine Meßungenauigkeiten da diese durch die Anordnung des Detektors 5 eliminiert werden. Dieser Detektor 5 muß symmetrisch zu dem Detektor 3, d.h. im gleichen Winkel Alpha zum Meßgut 6 angebracht sein, so daß beispielsweise bei Verkippung des Meßgutes 6 entgegen dem Uhrzeigersinn die geringere Meßwertfeststellung des Detektors 3 durch eine größere Meßwertfeststellung des Detektors 5 eliminiert ist.

## Patentansprüche

1. Vorrichtung zum kontinuierlichen Messen des Eisengehaltes in Zinkschichten und/oder der Stärke der Zinkschicht bei verzinktem Stahl während der Herstellung mittels Röntgenfluoreszenz, bestehend aus Hochspannungsröntgenstrahlungsquelle und mit selektiver Empfindlichkeit ausgestatteten Strahlungsdetektoren, **dadurch gekennzeichnet,** daß die Vorrichtung einen Meßkopf (1) aufweist, in dem die Röntgenstrahlungsquelle (2) in einem Winkel (γ) zwischen 60° und 120° und die Detektoren (3,4 und 5) angeordnet sind, wobei zwei auf Zink-Strahlung empfindliche Detektoren (3,5) in einem Winkel (α) von maximal 30° symmetrisch zum Meßgut und der andere, auf Eisenstrahlung empfindliche Detektor (4) in einem Winkel (β) zwischen 60 und 120° jeweils zur Ebene des zu messenden Materials stehen.

2. Vorrichtung nach Anspruch 1, **dadurch gekennzeichnet,** daß die Detektoren (3,4,5) durch Anbringung einer Metallfolie (10) als Absorptionsfilter selektive Empfindlichkeit aufweisen.

3. Vorrichtung nach Anspruch 1 oder 2, **dadurch gekennzeichnet,** daß die Detektoren (3,4,5) als Halbleiterdioden-Detektoren ausgebildet und jeweils an einen empfindlichen Verstärker (15) gekoppelt sind, wobei die Verstärker impulse in einem Einkanaldiskriminator (16) zur Erzielung der selektiven Empfindlichkeit der Detektoren (3,4,5) elektronisch auswählbar sind.

## Claims

1. A device using X-ray fluorescence for continuously measuring the iron content in zinc layers and/or the thickness of the zinc layer in galvanised steel during manufacture, the device comprising a high-voltage X-ray radiation source and radiation detectors having selective sensitivity, **characterised in that** the device comprises a measuring head (1) in which are arranged the detectors (3, 4, 5) and the X-ray radiation source (2) at an angle between 60° and 120°, two detectors (3, 5) being sensitive to zinc radiation and situated at an angle (α) of not more than 30° symmetrically with the measured material and the other detector (4) being sensitive to iron radiation and situated at an angle (β) between 60° and 120°, in each case to the plane of the material being measured.

2. A device according to claim 1, **characterised in that** the detectors (3, 4, 5) are given selective sensitivity by use of an absorption filter in the form of a metal foil (10).

3. A device according to claim 1 or 2, **characterised in that** the detectors (3, 4, 5) are semiconductor diode detectors and are coupled to respective amplifiers (15), the amplifier pulses being electronically selectable in a single-channel discriminator (16) in order to give selective sensitivity to the detectors (3, 4, 5).

## Revendications

1. Dispositif permettant de mesurer d'une manière continue la teneur en fer dans des couches de zinc et/ou l'épaisseur de la couche de zinc dans un acier galvanisé, pendant la fabrication et au moyen d'une fluorescence aux rayons X, constitué d'une source de rayons X à haute tension et de détecteurs de rayonnement possédant une sensibilité sélective, caractérisé en ce que le dispositif comprend une tête de mesure (1) dans laquelle sont disposés, dans chaque cas par rapport au plan du matériau à mesurer, la source de rayons X (2) en faisant un angle (γ) compris entre 60 et 120° et les détecteurs (3, 4 et 5), à savoir deux détecteurs (3, 5) sensibles à un rayonnement du zinc suivant un angle (α) d'au maximum 30° et d'une manière symétrique par rapport au matériau à mesurer, et l'autre détecteur (4), sensible à un rayonnement du fer, suivant un angle (β) compris entre 60° et 120°.

2. Dispositif suivant la revendication 1, caractérisé en ce que les détecteurs (3, 4, 5) possèdent une sensibilité sélective grâce à l'adjonction d'une feuille de métal (10) servant de filtre d'absorption.

3. Dispositif suivant la revendication 1 ou 2, caractérisé en ce que les détecteurs (3, 4, 5) sont réalisés sous forme de détecteurs à diodes à semi-conducteur et sont couplés chacun à un amplificateur sensible (15), les impulsions d'amplificateur pouvant être sélectionnés électroniquement dans un discriminateur (16) à un seul canal, servant à obtenir la sensibilité sélective des détecteurs (3, 4, 5).
